# EUROPÄISCHE PATENTSCHRIFT

(11) **EP 0 592 867 B1**
(45) Veröffentlichungstag und Bekanntmachung des Hinweises auf die Patenterteilung: **31.05.1995**
(21) Anmeldenummer: 93115695.4
(22) Anmeldetag: 29.09.1993
(51) Int. Cl.: C01B 21/06

(54) **Verfahren zur Herstellung von Tantal(v)-nitrid und dessen Verwendung**
Process for the preparation of tantalum (v) nitride and use thereof
Procédé de préparation de nitrure de tantale (v) et utilisation de celui-ci

(30) Priorität: 16.10.1992 DE 4234938
(43) Veröffentlichungstag der Anmeldung: 20.04.1994
(73) Patentinhaber: CERDEC AKTIENGESELLSCHAFT KERAMISCHE FARBEN, D-60327 Frankfurt (DE)
(72) Erfinder: Jansen, Martin, Prof., D-53127 Bonn (DE); Letschert, Hans-Peter, D-56235 Ransbach-Baumbach (DE); Speer, Dietrich, Dr., D-63457 Hanau (DE)

(56) Entgegenhaltungen:
- DE-A- 1 567 399
- US-A- 2 461 020

## Beschreibung

Die Erfindung betrifft ein Verfahren zur Herstellung von Tantal(V)-nitrid durch Nitridierung einer oxidischen Tantal(V)-verbindung. Die Erfindung richtet sich ferner auf die Verwendung des nach dem Verfahren erhältlichen Tantal(V)-nitrids als Farbpigment.

Farbkörper, wie beispielsweise Pigmente, unterliegen je nach Anwendungsart und Gebrauch der damit eingefärbten Artikel unterschiedlichsten Beeinträchtigungen. Im Falle von mit Pigmenten auf der Basis oxidischer, sulfidischer oder selenidischer Schwermetallverbindungen eingefärbten Kunststoffartikeln können auch saure oder alkalische Lösungen toxikologisch bedenkliche Bestandteile freigesetzt werden - beispielsweise Ni, Co, Zn, Cr aus Spinellen und Cd aus Cadmiumsulfid-Gelb sowie Cd und Se aus Cadmiumsulfoselenid-Rot.

Ein weiteres Problem ist die Freisetzung toxischer Schwermetalle bei der Verbrennung derart eingefärbter Kunststoffe in Müllverbrennungsanlagen. Es besteht somit ein besonderes Interesse, Pigmente im gelben bis roten Spektralbereich zu finden, die toxikologisch weniger bedenkliche Bestandteile enthalten als beispielsweise CdS-Gelb und Cd(S,Se)-Rot.

Die Nitridierung von Tantal(V)-verbindungen mit Ammoniak bei hohen Temperaturen, wobei rotes Tantal(V)-nitrid (Ta₃N₅) über dunkelgrüne, hellgrüne, gelbbraune, rotbraune Zwischenstufen gebildet wird, wurde verschiedentlich untersucht. Hinweise zur Verwendung von Tantal(V)-nitrid (Ta₃N₅) als Farbpigment sind aber nicht bekannt.

Das Nitrid des fünfwertigen Tantals läßt sich gemäß H. Moureau und C.H. Hamblet (J. Amer. Chem. Soc. 59, 33-40 (1937)) durch Ammonolyse von TaCl₅ herstellen; die Zwischenstufe Ta(NH₂)₂Cl₃ wird im Ammoniakstrom bei 650 bis 750 °C zu Ta₃N₅ zersetzt. Das hierbei gewonnene Nitrid war nicht rein, denn es enthielt oxidische Bestandteile. Zudem waren die Reaktionszeiten - 6 Tage bei 750 °C - sehr lang.

H. Funk und H. Böhland (Z. anorg. allg. Chem. 334, 155-62 (1964)) konnten die Reaktionszeiten verkürzen, indem als Ausgangsprodukt (NH₄)₂TaF₆ eingesetzt wurde. Wegen der Flüchtigkeit von TaF₅ und NH₄F sind die Ausbeuten an Ta₃N₅ nur gering und/oder die Produkte sind fluorhaltig.

Offenbart wurde in dem genannten Dokument auch die Nitridierung von Tantal(V)-oxid (Ta₂O₅) bei 800 °C mit Ammoniak; es bildet sich bei 800 °C oxidhaltiges Nitrid (Ta₃N₅ (O)), dessen Farbe nicht näher gekennzeichnet wurde. Die Nitridierung von reinem Tantalpentoxid mit gereinigtem Ammoniak wurde unter Bezugnahme auf die Untersuchung von Funk und Böhland von G. Brauer und J.R. Weidlein (Angew. Chem. 77, 218-9 (1965)) erneut untersucht: In Anwesenheit von Titan-Spänen als Getter für Sauerstoff und analog für den Ammoniakzerfall erfordert die Umsetzung eine Reaktionszeit von 36 bis 120 Stunden bei 860 °C bis 920 °C; nur in Anwesenheit der Titanspäne ist die Umsetzung vollständig. Bei der Nacharbeitung der Untersuchungen von Brauer und Weidlein durch die Erfinder der vorliegenden Anmeldung konnten die Reaktionszeiten nicht bestätigt werden: Erst nach einer Reaktionszeit von 150 Stunden ist die Farbbildung abgeschlossen, das heißt, es findet keine weitere Farbverschiebung von rotbraun nach rot statt.

Aufgabe der vorliegenden Erfindung ist, wie bereits oben angesprochen, ein toxikologisch unbedenkliches, im wesentlichen rotes Farbpigment aufzuzeigen, das sich zur Einfärbung von Kunststoffen eignet. Eine weitere Aufgabe richtet sich auf die Bereitstellung eines verbesserten Verfahrens zur Herstellung des Farbpigments: Ziel war, gegenüber dem vorbekannten Verfahren, bei gegebener Reaktionszeit ein Pigment mit höherer Farbintensität zu erreichen und/oder die Reaktionszeit zu verkürzen. Das Verfahren sollte von leicht zugänglichen Rohstoffen ausgehen und sicher reproduzierbar sein.

Gefunden wurde ein Verfahren zur Herstellung von Tantal(V)-nitrid durch Nitridierung einer oxidischen Tantal(V)-verbindung mit trockenem Ammoniak bei 750 °C bis 950 °C, das dadurch gekennzeichnet ist, daß man als oxidische Tantal(V)-verbindung Tantal(V)-oxidhydrat der formelmäßigen Zusammensetzung Ta₂O₅ · aq mit einem Hydratgehalt (=aq-Gehalt) im Bereich von 14 bis 17 Gew.-% einsetzt.

Die Unteransprüche richten sich auf bevorzugte Ausführungsformen des Verfahrens.

Gefunden wurde ferner, daß das nach dem erfindungsgemäßen Verfahren erhältliche Tantal(V)-nitrid (Ta₃O₅) als Farbpigment, insbesondere zur Einfärbung von Kunststoffen und Lacken, verwendet werden kann.

Die Nitridierung erfolgt im Prinzip gemäß folgender Gleichung:

3 Ta₂O₅ · aq + 10 NH₃ → 2 Ta₃N₅ + 15 H₂O + aq

Der Hydratgehalt (aq) des Tantal(V)-oxidhydrats entspricht einem Tetra- bis Pentahydrat. Der Hydratgehalt (aq) wird gravimetrisch durch Erhitzen des bei 120 °C getrockneten Tantal(V)-oxidhydrats auf 1000 °C bestimmt. Welche konkrete Struktur das zu verwendende Tantal(V)-oxidhydrat aufweist - etwa eine solche gemäß obiger Formel Ta₂O₅ · 5 H₂O oder gemäß Ta(OH)₅ oder Mischformen - ist bisher nicht bekannt; erfindungswesentlich ist, daß das bei 120 °C getrocknete Tantal(V)-oxidhydrat einen Restwassergehalt von 14 bis 17 Gew.-%, insbesondere 16 bis 17 Gew.-%, aufweist.

Es war nicht vorhersehbar, daß durch Verwendung des erfindungsgemäß einzusetzenden Tantal(V)-oxidhydrats anstelle des vorbekannten Tantal(V)-oxids (Ta₂O₅), Tantal(V)-nitrid in höherer Reinheit und damit höherer Farbintensität hergestellt werden kann.

Die Herstellung von erfindungsgemäß bevorzugt einsetzbarem Tantal(V)-oxidhydrat umfaßt im wesentlichen die Schritte: (a) Auflösen von Tantalpentachlorid in konz. Salzsäure in der Siedehitze, (b) Verdünnen der Lösung mit Wasser und Zugabe von wäßrigem Ammoniak bis etwa pH 7, (c) Abfiltrieren des Niederschlags, eventuell nach vorhergehendem Behandeln der Suspension in der Siedehitze, (d) Waschen des Niederschlags mit Wasser bis zur Chloridfreiheit und schließlich mit Ethanol und (e) Trocknen bei 120 °C. Das derart hergestellte Produkt ist röntgenamorph und weist einen Restwasssergehalt im Bereich von etwa 16 bis 17 Gew.-% auf.

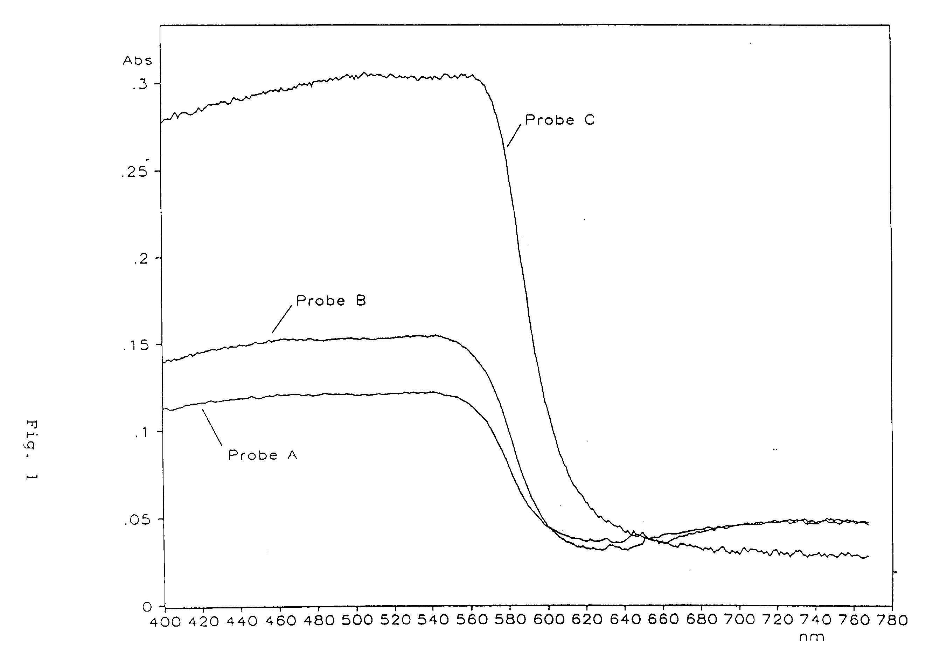

Der erfindungsgemäße Effekt des neuen Verfahrens, nämlich eine wesentlich höhere Farbintensität bei gegebener Reaktionsdauer und zusätzlich eine erwünschte Rotverschiebung wird aus den vergleichenden UV-VIS-Spektren deutlich (Fig. 1, 2 und 3):
Fig. 1 zeigt das UV-VIS-Spektrum von drei Ta₃N₅-Proben, wobei die Proben A und B nach dem vorbekannten Verfahren des Standes der Technik aus Ta₂O₅ bei 820 °C und einer Reaktionsdauer von 80 beziehungsweise 120 Stunden hergestellt wurden, die erfindungsgemäße Probe C dagegen aus Ta₂O₅ · aq, bei 820 °C und 80 Stunden Reaktionsdauer. Die Abszisse zeigt die Wellenlänge in nm, die Ordinate den Absorptionskoeffizienten; gemessen wurde jeweils die gleiche Probenmenge (60 mg auf 4500 mg BaSO₄) im Vergleich zum Standard BaSO₄; die Messung erfolgte in Reflexionsstellung (Ulbricht Kugel). Die Probe C erwies sich als wesentlich farbintensiver. Durch eine Verlängerung der Reaktionsdauer von 80 (Probe A) auf 120 Stunden (Probe B), konnte im Falle des vorbekannten Verfahrens die Farbintensität zwar geringfügig erhöht werden, sie reicht aber selbst dann bei weitem nicht an jene der erfindungsgemäß hergestellten Probe C heran.

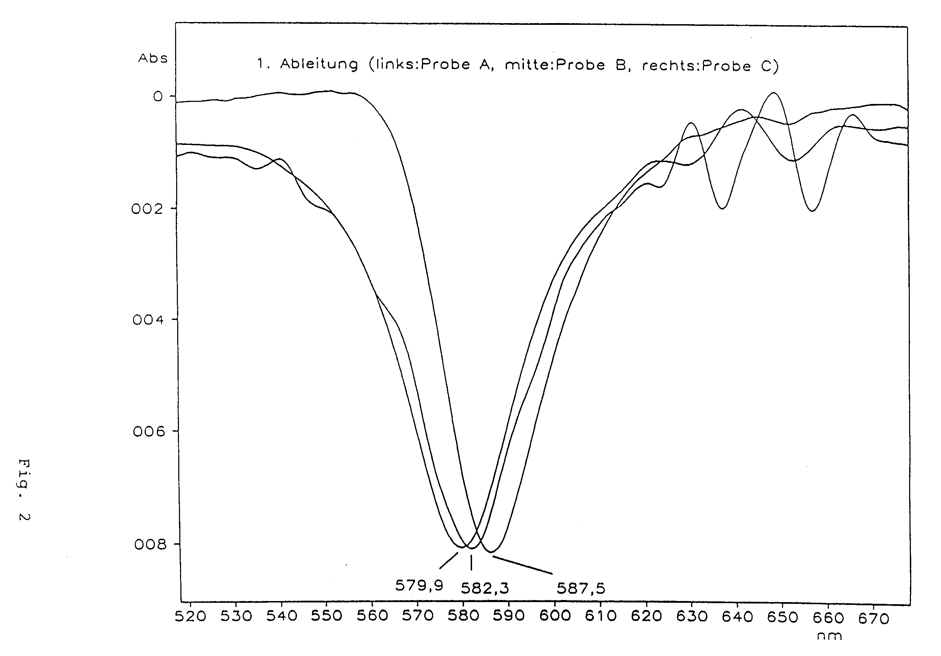

Fig. 2 zeigt die 1. Ableitung der Absorptionsspektren der Fig. 1. Hieraus wird die genaue Lage der Absorptionskante deutlich. Die Absorptionskante der erfindungsgemäß hergestellten Probe C liegt bei 588 nm, ist also gegenüber der Probe A (580 nm) und Probe B (582 nm) nach Rot verschoben.

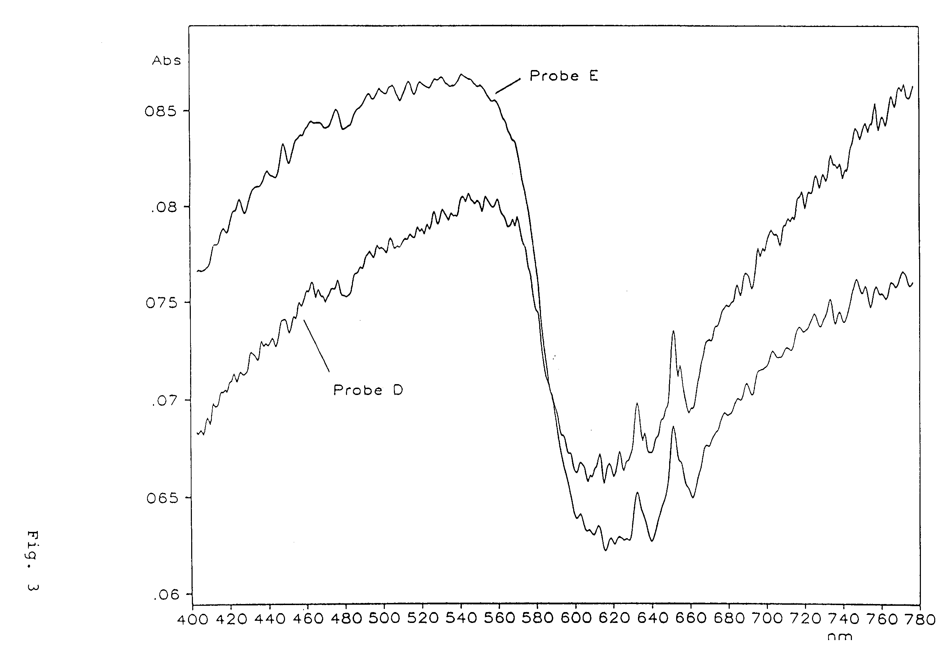

Fig. 3 zeigt das UV-VIS-Spektrum von Tantal(V)-nitrid, hergestellt nach der Vorschrift von Brauer und Weidlein (Angew. Chem. 77, 218 (1965) beziehungsweise Z. anorg. allg. Chem. 348, 298 (1966)) mit Ti-Spänen als O₂-Getter, bei 900 °C in 36 h (Probe D) beziehungsweise 60 h (Probe E) Reaktionsdauer. Die Farbintensität ist wesentlich niedriger als jene der erfindungsgemäß hergestellten Probe C; das Absorptionsmaximum reicht auch nicht an jenes der Probe A und B heran - die Meßparameter waren bei allen Proben A bis E gleich, so daß die Kurven unmittelbar miteinander vergleichbar sind.

Die Nitridierung läßt sich in einem Ofen bei 750 bis 950 °C, vorzugsweise 800 bis 870 °C, durchführen, indem ein trockener Ammoniakstrom über die zu nitridierende Tantalverbindung geleitet wird.

Bei Vergrößerung der Ansatzmenge durch Erhöhung der Schichtdicke ist im allgemeinen eine Verlängerung der Reaktionsdauer notwendig, um eine bei kleinerer Ansatzmenge erhältliche Farbintensität zu erzielen. Dieser nachteilige Effekt läßt sich dadurch beheben, daß man die Nitridierung in Anwesenheit eines Flußmittels aus der Reihe der Ammoniumsalze, der Kohlensäure oder der niederen ein- oder mehrwertigen Carbonsäuren durchführt.

Eine weitere Alternative, die Reaktionsdauer zu verkürzen besteht darin, daß man die Nitridierung in Anwesenheit eines Flußmittels aus der Reihe der Borsäuren, Borsäureanhydrid oder Ammoniumsalze der Borsäuren durchführt.

Unter den Ammoniumsalzen der kohlenstoffhaltigen Säuren sind Ammoniumcarbonat, Ammoniumhydrogencarbonat, sowie Ammoniumformiat, -acetat und Ammoniumoxalat hervorzuheben, wobei Ammoniumcarbonat besonders bevorzugt wird. Es wird angenommen, daß das im intensiv homogenisierten Pulvergemisch aus Tantal(V)-oxidhydrat und Flußmittel - erhältlich beispielsweise durch gemeinsames Vermahlen in einer Kugelmühle - enthaltene Ammoniumsalz eine erste Nitridierung bewirkt. Gerade im Falle des Ammoniumcarbonats ist dies überraschend, da dieses bereits ab 58 °C zu sublimieren beginnt.

Während unter vergleichbaren Temperatur- und NH₃-Begasungsbedingungen zur vollständigen Nitridierung von 1 g Tantal(V)-oxidhydrat (Ta₂O₅ · aq) 80 Stunden erforderlich sind, muß die Reaktionsdauer in Abwesenheit eines Flußmittels im Falle von 20 g Ta₂O₅ · aq (höhere Schüttung) um mindestens 50 % verlängert werden, um die Farbbildung abzuschließen. Durch die Nitridierung in Gegenwart eines Flußmittels aus der Gruppe der Ammoniumsalze der C-haltigen Säuren läßt sich die Reaktionsdauer wieder bis auf den ursprünglichen Wert oder gegebenenfalls darunter verkürzen, ohne daß es zu einer Veränderung der Farbwerte kommt. Dieser unerwartete Vorteil ist für eine technische Nutzung des Verfahrens, also Herstellung des Ta₃N₅ in großem Maßstab von Bedeutung.

Die Reaktionsdauer verkürzende Wirkung der Flußmittel aus der Reihe der Borverbindungen übersteigt jene der zuvor beschriebenen Flußmittel. Außer dem Borsäureanhydrid, das bevorzugt wird, können Metaborsäure, Orthoborsäure oder Tetraborsäure oder Ammoniumsalze der genannten Säuren eingesetzt werden.

Das der Nitridierung zuzuführende intensiv homogenisierte Pulvergemisch aus Ta₂O₅ · aq und Flußmittel läßt sich außer mittels üblicher Misch- und Mahlverfahren auch durch Besprühen des Ta₂O₅ · aq mit einer wäßrigen Lösung oder Suspension eines oder mehrerer der genannten Flußmittel erzeugen.

Die Menge Flußmittel ist in weiten Bereichen wählbar und hängt von der gewünschten Verkürzung der Reaktionsdauer ab. Üblicherweise liegt das Gewichtsverhältnis Ta₂O₅ · aq zu Flußmittel im Bereich zwischen 1 zu 0,01 und 1 zu 2; bevorzugt wird ein Bereich zwischen 1 zu 0,1 und 1 zu 1.

Soweit die eingesetzten Flußmittel oder Bestandteile derselben während der Nitridierung im Tantal(V)-nitrid verbleiben, ist es zweckmäßig, diese nach der Nitridierung auszuwaschen; im Falle der Borverbindungen wird dies vorzugsweise mittels wäßriger Laugen, etwa Natronlauge, erfolgen.

In Gegenwart einer großen Menge (z. B. Ta₂O₅ · aq : B₂O₃ = 1:1) eines borhaltigen Flußmittels läßt sich die Reaktionsdauer bis auf etwa ein Fünftel derjenigen ohne Flußmittel absenken. Derart hergestelltes Ta₃N₅ zeigt allerdings eine etwas geringere Brillanz als in Abwesenheit oder Anwesenheit einer nur geringen Menge eines borhaltigen Flußmittels hergestelltes Tantal(V)-nitrid.

Die Vorteile des erfindungsgemäßen Verfahrens sind die damit erhältliche höhere Farbintensität und Rotverschiebung des Pigments, die Verkürzung der Reaktionsdauer und sichere Reproduzierbarkeit im technischen Maßstab.

Wie bereits oben dargelegt, ist das nach dem erfindungsgemäßen Verfahren erhältliche Tantal(V)-nitrid als Farbpigment verwendbar. Einsatzgebiete sind außer Kunststoffen und Lacken auch Druckfarben und Tinten. Das Tantal(V)-nitrid ist thermisch weitgehend stabil, weshalb eine Einfärbung der Kunststoffe in der Masse mit anschließender Extrusion bei Temperaturen von 200 bis 300 °C problemlos ist. Auch Einbrennlacke lassen sich wegen der thermischen Stabilität des Pigments hiermit einfärben - siehe Beispiel 4.

Der Verwendung von Tantal(V)-nitrid als Farbpigment stand bisher offensichtlich das Vorurteil entgegen, daß die Herstellung dieses Pigments, in dessen Verlauf unterschiedlichste Farben durchlaufen werden, nicht in reproduzierbarer Qualität gewährleistet werden konnte. Dieses Vorurteil wurde durch das erfindungsgemäße Verfahren behoben. Die Palette an bis 300 °C temperaturstabilen, roten Pigmenten für die Verwendung in Kunststoffen und Lacken, welche eine thermische Behandlung durchlaufen, wurde durch die Erfindung erweitert.

Die nachfolgenden Beispiele richten sich auf die Herstellung und Verwendung von Tantal(V)-nitrid.

### Vergleichsbeispiele A und B

### Herstellung von Ta₃N₅

Handelsübliches Tantalpentoxid (>99,9 % Ta₂O₅) wird 30 min in einer Kugelmühle gemahlen. 1 g Ta₂O₅ wird in ein Korundschiffchen (l = 70 mm, b = 9 mm) gegeben und im Ammoniakstrom (9 l/h; Trocknung über KOH-Türme) 80 Stunden (Versuch A bzw. 120 Stunden (Versuch B) lang auf 820 °C geheizt.

Fig. 1 zeigt die UV-VIS Absorptionsspektren, wobei Kurve A dem Vergleichsbeispiel A und Kurve B dem Vergleichsbeispiel B entspricht. Die maximale Absorption von A und B ist wesentlich geringer als diejenige der Kurve C (= erfindungsgemäßes Beispiel 1). Aus Fig. 2 (= 1. Ableitung der Kurven von Fig. 1) ist erkennbar, daß die Absorptionskante der des erfindungsgemäßen Pigments (= Kurve C) weiter im Roten liegt als diejenige der nach dem Stand der Technik hergestellten Produkte (= Kurven A und B).

### Vergleichsbeispiele D und E

Ta₃N₅ wurde nach der Vorschrift von Brauer und Weidlein in Angew. Chem. 77, 218 (1965) bzw. Z. anorg. allg. Chem. 348, 298 (1966) mit Ti-Spänen als O₂-Getter aus Ta₂O₅ dargestellt.

1,5 g Ta₂O₅ wurden zuerst 30 min in der Kugelmühle gemahlen, dann im Korundschiffchen 36 (Versuch D) bzw. 60 (Versuch E) Stunden bei 900 °C im NH₃-Strom (4 l/h) behandelt. Unmittelbar vor der Probe stand ein Schiffchen mit Ti-Spänen.

Die Kurven D und E in Fig. 3 zeigen die Absorptionskurve - die maximale Absorption ist viel niedriger als diejenige der Kurve C in Fig. 1; die Meßbedingungen waren in allen Fällen gleich:

### Meßparameter (für Fig. 1 und Vergleichsbeispiele D, E)

- Gerät:: Cary 2400 UV-VIS-Spektrophotometer Fa. Varian, Darmstadt
- Meßbereich:: 400 bis 780 nm
- Basislinien:: Korrigierte Messungen
- Einwaage:: 60 mg Probe auf 4,5 g BaSO₄
- Ordinate:: Absorption
- Abszisse:: Wellenlänge in nm
- Scanrate:: 1 mm sec⁻¹
- Meßinterval:: 0,5 nm

### Beispiel 1

### a) Herstellung von Ta₂O₅ · aq

2,5 g Tantal(V)-chlorid werden in 100 ml konz. Salzsäure in der Siedehitze gelöst. Anschließend wird mit 20 ml Wasser verdünnt und Ta₂O₅ · aq mit konz. Ammoniaklösung bei pH=7 gefällt. Eine längeres Kochen des Niederschlags ermöglicht ein problemloses Abfiltrieren. Anschließend wird der Niederschlag mit Wasser chloridfrei gewaschen, mit Ethanol aufgeschlämmt und bei 120 °C bis zur Gewichtskonstanz getrocknet. Das röntgenamorphe Ta₂N₅ · aq wies einen Restwassergehalt von 16,2 Gew.-% auf - bestimmt durch Glühen bis 1000 °C.

### b) Herstellung von Ta₃N₅ aus Ta₂O₅ · aq

In gleicher Weise wie in Vergleichsbeispiel 1A beschrieben, wurde 1 g Ta₂O₅ · aq 80 Stunden bei 820 °C im NH₃-Strom (9 l/h) geheizt. Kurve C in Fig. 1 und Fig. 2 zeigt die höhere Absorption und nach Rot verschobene Absorptionskante.

### Beispiel 2

a) Versuch 1b wurde wiederholt, wobei jedoch im gleichen Ofen und Schiffchen 4 g Ta₂O₅ · aq eingesetzt wurden. Bis zum Erreichen der gleichen Farbintensität wie in Beispiel 1b (= Kurve C in Fig. 1) waren bei 820 °C und 9 l NH₃/h 120 h notwendig.
b) 4 g Ta₂O₅ · aq wurden mit 0,7 g (NH₄)₂CO₃ gemischt und in der Kugelmühle 30 Minuten gemahlen. Die Nitridierung erfolgte wie in Beispiel 2a, jedoch war die Farbbildung nach 80 Stunden abgeschlossen. Durch die Mitverwendung eine Flußmittels kann somit die Reaktionsdauer wesentlich reduziert werden.

### Beispiel 3

d) Frisch (gemäß Beispiel 1a) gefälltes Tantaloxid (Ta₂O₅ · aq, 0,5 g, 30 min Kugelmühle) wird mit Bortrioxid (0,5 g) als Flußmittel im Achatmörser vermischt und 5 h lang im Ammoniakstrom (9 l/h) bei 820 °C umgesetzt. Das Flußmittel wird anschließend mit 10 %iger Kaliumhydroxidlösung in der Siedehitze entfernt. Die Brillanz des erhaltenen Pigments ist etwas geringer als diejenige des Pigments gemäß Beispiel 1b.

### Beispiel 4

a) Tantal(V)-nitrid hergestellt gemäß Beispiel 2b wurde im Vollton als auch in einer Weißausmischung in PVC-Plastisol eingearbeitet und coloristisch geprüft. 1 g Ta₃N₅ wurden mit 3 g Plastisol vermischt und in einer Farbausreibemaschine dispergiert. Für die Weißausmischung wurden 0,1 Ta₃N₅ mit 1 g TiO₂ vermengt und in gleicher Weise weiterverarbeitet. Mit einem Schlitten wurden aus den Pasten Aufstriche in einer Dicke von 0,5 mm hergestellt, deren Gelierung durch 10-minütiges Erhitzen auf 140 °C erfolgte. Mit einem Spektralphotometer wurden die Farbwerte a und b im CIE-Lab-System (DIN 5033) gemessen:

| | Vollton | Weißausmischung |
|---|---|---|
| a | + 40,5 | + 15 |
| b | + 31 | + 18 |

b) Durch 10-minütige thermische Behandlung des in Beispiel 4a eingesetzten Ta₃N₅ bei 300 °C und Testung des erhaltenen Pigments in gleicher Weise wie vorstehend beschrieben, führt zu folgenden a- und b-Werten des eingefärbten PVC-Plastisols:

| | Vollton | Weißausmischung |
|---|---|---|
| a | + 43 | + 16,5 |
| b | + 33 | + 19 |

Das erfindungsgemäß hergestellte Ta₃N₅-Pigment ist, wie der Vergleich der Versuche 4a mit 4b zeigt, ausreichend temperaturstabil, um die bei der Kunststoffverarbeitung übliche Temperaturbehandlung ohne nennenswerte Farbveränderung zu überstehen.

## Patentansprüche

1. Verfahren zur Herstellung von Tantal(V)-nitrid durch Nitridierung einer oxidischen Tantal(V)-verbindung mit trockenem Ammoniak bei 750 °C bis 950 °C,
dadurch gekennzeichnet,
daß man als oxidische Tantal(V)-verbindung Tantal(V)-oxidhydrat der formelmäßigen Zusammensetzung Ta₂O₅ · aq mit einem Hydratgehalt (=aq-Gehalt) im Bereich von 14 bis 17 Gew.-% einsetzt.

2. Verfahren nach Anspruch 1,
dadurch gekennzeichnet,
daß man die Nitridierung bei 800 bis 870 °C durchführt.

3. Verfahren nach Anspruch 1 oder 2,
dadurch gekennzeichnet,
daß man die Nitridierung in Anwesenheit eines Flußmittels aus der Reihe der Ammoniumsalze, der Kohlensäure oder der niederen ein- oder mehrwertigen Carbonsäuren durchführt.

4. Verfahren nach Anspruch 1 oder 2,
dadurch gekennzeichnet,
daß man die Nitridierung in Anwesenheit eines Flußmittels aus der Reihe der Borsäuren, Borsäureanhydrid oder Ammoniumsalze der Borsäuren durchführt.

5. Verfahren nach Anspruch 3 oder 4,
dadurch gekennzeichnet,
daß Tantal(V)-oxidhydrat und Flußmittel im Gewichtsverhältnis 1 zu 0,01 bis 1 zu 2, insbesondere 1 zu 0,1 bis 1 zu 1, einsetzt.

6. Verfahren nach einem oder mehreren der Ansprüche 3 bis 5,
dadurch gekennzeichnet,
daß man ein intensiv homogenisiertes Pulvergemisch aus Tantal(V)-oxidhydrat und Flußmittel nitridiert.

7. Verwendung des nach den Ansprüchen 1 bis 6 erhältlichen Tantal(V)-nitrids (Ta₃N₅) als Farbpigment, insbesondere zum Einfärben von Kunststoffen und Lacken.

## Claims

1. A process for preparing tantalum(V) nitride by nitriding an oxidic tantalum(V) compound with dry ammonia at 750°C to 950°C,
characterised in that
tantalum(V) oxide hydrate with the composition in accordance with the formula Ta₂O₅.aq with a hydrate content (= aq content) in the range 14 to 17 wt.% is used as an oxidic tantalum(V) compound.

2. A process according to Claim 1, characterised in that nitriding is performed at 800 to 870°C.

3. A process according to Claim 1 or 2, characterised in that nitriding is performed in the presence of a flux from the group consisting of ammonium salts of carbonic acid or the lower mono or polybasic carboxylic acids.

4. A process according to Claim 1 or 2, characterised in that nitriding is performed in the presence of a flux from the group consisting of boric acids, boron oxide or ammonium salts of boric acids.

5. A process according to Claim 3 or 4, characterised in that tantalum(V) oxide hydrate and flux are used in the ratio by weight of 1 to 0.01 to 1 to 2, in particular 1 to 0.1 to 1 to 1.

6. A process according to one or more of Claims 3 to 5, characterised in that an intensively homogenised powder mixture of tantalum(V) oxide hydrate and flux is nitrided.

7. Use of the tantalum (V) nitride (Ta₃N₅) obtainable according to Claims 1 to 6 as a colouring pigment, in particular for colouring plastics and lacquers.

## Revendications

1. Procédé de préparation de nitrure de tantale (V) par nitrification d'un composé de tantale (V) par voie d'oxydation avec de l'ammoniac sec de 750°C à 950°C, caractérisé en ce qu'on met en oeuvre comme composé de tantale (V) par voie d'oxydation de l'hydrate d'oxyde de tantale (V) de composition de formule Ta₂O₅ . aq avec une teneur en hydrate (= teneur en aq) comprise dans la zone de 14 à 17 % en poids.

2. Procédé selon la revendication 1, caractérisé en ce qu'on réalise la nitrification entre 800 et 870°C.

3. Procédé selon les revendications 1 ou 2, caractérisé en ce qu'on exécute la nitrification en présence d'un solvant de la série des sels d'ammonium, du charbon ou d'acides carboxyliques inférieurs à une ou plusieurs valences.

4. Procédé selon les revendications 1 ou 2, caractérisé en ce que on exécute la nitrification en présence d'un solvant de la série des acides boriques, de l'anhydride borique ou de sels d'ammonium, des acides boriques.

5. Procédé selon les revendications 3 ou 4, caractérisé en ce que de l'hydrate d'oxyde de tantale (V) et du solvant sont mis en oeuvre, dans un rapport de poids compris de 1 : 0,1 à 1 : 2, en particulier de 1 : 0,1 à 1 : 1.

6. Procédé selon une ou plusieurs des revendications 3 à 5, caractérisé en ce qu'on nitrure un mélange de poudre homogénéisé de manière intensive d'hydrate d'oxyde de tantale (V) et de solvant.

7. Utilisation de nitrure de tantale (V) (Ta₃N₅) obtenu comme pigment coloré, en particulier pour la coloration des matières plastiques et des laques.
